# FASCICULE DE BREVET EUROPEEN

(11) **EP 2 808 207 B1**
(45) Date de publication et mention de la délivrance du brevet: **07.09.2016**
(21) Numéro de dépôt: 14167068.7
(22) Date de dépôt: 05.05.2014
(51) Int. Cl.: B60S 1/38, B60S 1/40, B60S 1/52

(54) **Interface de connexion hydraulique et/ou électrique pour balai d'essuie-glace**
Hydraulische und/oder elektrische Anschlussschnittstelle für Scheibenwischerarm
Hydraulic and/or electric connection interface for windscreen-wiper blade

(30) Priorité: 13.05.2013 FR 1354274
(43) Date de publication de la demande: 03.12.2014
(73) Titulaire: Valeo Systèmes d'Essuyage, 78321 Le Mesnil Saint Denis (FR)
(72) Inventeur: Izabel, Vincent, 91380 CHILLY MAZARIN (FR); Jarasson, Jean-Michel, 78321 LE MESNIL SAINT DENIS (FR)
(74) Mandataire: Callu Danseux, Violaine

(56) Documents cités:
- FR-A1- 2 968 256
- FR-A1- 2 968 258
- US-A1- 2012 167 326

## Description

Le domaine de la présente invention est celui des équipements pour les véhicules, et plus particulièrement celui des équipements pour l'essuyage des vitres des automobiles.

Les automobiles sont couramment équipées de systèmes d'essuie-glace pour assurer un lavage du pare-brise et éviter que la vision qu'a le conducteur de son environnement ne soit perturbée. Ces essuie-glaces sont classiquement entraînés par des bras ou porte-balai effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, de palonniers articulés qui tiennent la lame racleuse en plusieurs endroits discrets, soit, dans une version plus récente dénommée "flat blade" (pour "lame plate"), d'un ensemble semi-rigide qui maintient la lame racleuse sur toute sa longueur. Dans les deux solutions, le balai est rattaché au porte-balai tournant de l'essuie-glace par un ensemble constitué d'un connecteur mécanique et d'un adaptateur. Le connecteur mécanique est une pièce qui est sertie sur le palonnier ou directement sur le balai plat, alors que l'adaptateur est une pièce intermédiaire qui permet la fixation du connecteur sur le porte-balai de l'essuie-glace. Ces deux pièces sont reliées l'une à l'autre par un axe transversal qui autorise leur rotation relative, dans un plan perpendiculaire au pare-brise et passant par le porte-balai.

Il est également connu de munir les véhicules de dispositifs permettant d'amener un liquide lave-vitre qui est acheminé depuis un réservoir situé sous le capot et qui est pulvérisé en direction du pare-brise par des buses situées soit à proximité du pare-brise, soit sur l'essuie-glace lui-même pour une meilleure distribution du liquide. Dans le cas de buses placées sur les balais, le liquide lave-vitre est acheminé par des canalisations qui sont fixées sur le porte-balai de l'essuie-glace et qui sont raccordées au balai au niveau du connecteur mécanique par une interface de connexion. L'interface de connexion se fixe sur le connecteur mécanique par des embouts appropriés et assure une nécessaire étanchéité avec lui.

Alors que les canalisations de liquide et l'interface de connexion sont généralement liées au porte-balai de l'essuie-glace, le connecteur mécanique est lié au balai et il est nécessaire d'assurer le branchement de l'interface de connexion sur le connecteur mécanique lors d'un changement de balai. Cette opération s'effectue dans une position, dite de service.

Il est nécessaire de veiller à ce que l'interface de connexion soit correctement alignée, lors de l'installation dans le connecteur mécanique, faute de quoi un mauvais assemblage se traduirait par un risque de fuite du liquide lave-vitre au niveau de la jonction des deux connecteurs.

En outre, lors du désaccouplement ou démontage du balai par rapport au porte-balai, il importe que l'interface de connexion reste attachée au porte-balai. Ceci évite que l'interface de connexion ne soit entraînée par le connecteur mécanique dans son mouvement de séparation d'avec le porte-balai de l'essuie-glace.

Il faut cependant que, après montage du balai dans le bras, l'interface de connexion ne limite pas la nécessaire liberté de mouvement en rotation de l'adaptateur par rapport au connecteur mécanique.

On connait à cette fin des balais d'essuie glace dont l'interface de connexion est maintenue en position de service par encliquetage dans des ouvertures d'une pièce intermédiaire interne au porte-balai, tel que celui décrit dans la demande WO2012072748.

Un certain nombre d'utilisateurs ont cependant eu des difficultés à passer le balai en position de service dès lors que celle-ci est réalisée à l'intérieur du porte-balai, sans être visible par l'utilisateur.

FR-A-2 968 256 montre le préambule de la revendication 1.

La présente invention a pour but de remédier à ces inconvénients en tout ou partie.

A cet effet, l'invention a pour objet un ensemble pour la réalisation d'un système d'essuyage de pare-brise de véhicule, comprenant une pièce terminale d'un porte-balai d'essuyage, destiné à déplacer un balai d'essuyage, une interface de connexion et une pièce intermédiaire, ledit ensemble étant apte à occuper une position de travail dans laquelle ladite interface est libre par rapport à ladite pièce terminale et une position de service dans laquelle ladite interface est retenue de manière orientée par rapport à ladite pièce terminale par ladite pièce intermédiaire.

Selon l'invention, au moins une partie de ladite pièce intermédiaire, dite levier, est configurée de sorte à être accessible de façon à pouvoir être manipulée en rotation pour passer de la position de travail à la position de service.

Les opérations de montage sont ainsi facilitées car elles font appel à un mouvement intuitif de levier. En outre, la pièce intermédiaire à actionner, à savoir le levier, est visible extérieurement.

Selon différents modes de réalisation de l'invention, qui pourront être pris ensemble ou séparément :
- ledit ensemble comporte au moins un premier téton situé sur l'un des éléments parmi ledit levier et ladite interface, et au moins un logement, situé sur l'autre élément, le ou lesdits logements étant apte à retenir le ou lesdits premiers tétons en position de service,
- le ou lesdits premiers tétons sont cylindriques,
- le ou lesdits logements sont situés sur ledit levier,
- le ou lesdits logements sont mobiles en rotation,
- le ou lesdits logements définissent une première butée,
- le ou lesdits logements sont des crochets,
- lesdits crochets sont, au moins en partie, cylindriques,
- lesdits crochets sont ouverts et venus de matière avec ledit levier,
- ladite pièce terminale et/ou ledit porte-balai définissent une deuxième butée apte à empêcher ladite interface de pivoter à l'intérieur de ladite pièce terminale en position de service,
- ladite interface présente une géométrie extérieure apte à coopérer avec ladite deuxième butée,
- ladite interface comprend au moins un connecteur hydraulique et/ou un connecteur électrique,
- ladite interface présente des moyens aptes à la bloquer sur un connecteur du balai en position de travail, lesdits moyens étant des seconds tétons, différents du ou des premiers tétons,
- lesdits seconds tétons sont cylindriques et aptes à être retenus par des contre-formes, lesdites contre-formes étant au moins en partie cylindriques et appartenant audit connecteur du balai,
- ladite interface comprend des moyens assurant le verrouillage du connecteur hydraulique audit connecteur électrique,
- ledit levier comprend un manche permettant de le faire passer de ladite position de travail à ladite position de service,
- ledit manche couvre au moins une partie dudit porte-balai,
- ledit manche est situé sur une face dudit porte-balai, destinée à être à l'opposé du balai,
- ledit levier est configuré de telle sorte que le manche adopte, en position de travail, une position parallèle à la direction longitudinale du porte-balai,
- ledit levier est configuré de telle sorte que le manche adopte, en position de service, une position orthogonale à la direction longitudinale du porte-balai,
- la pièce terminale comprend une fenêtre pour le passage dudit levier,
- ledit ensemble comprend une pièce supplémentaire solidaire de la pièce terminale est configurée pour permettre une articulation entre ledit levier et ladite pièce terminale.

L'invention concerne aussi un dispositif de connexion comprenant un ensemble tel que décrit plus haut, un connecteur destiné à être fixé audit balai et un adaptateur de raccordement du connecteur audit porte-balai.

Selon différents modes de réalisation de l'invention, qui pourront être pris ensemble ou séparément
- ledit adaptateur comprend des moyens de maintien sur le porte-balai en position de travail, ledit levier comprenant des moyens de verrouillage desdits moyens de maintien, de manière à retenir l'adaptateur sur le porte-balai,
- l'adaptateur est lié au connecteur pour être monté sur le porte-balai avec un degré de pivotement autour d'un premier axe de rotation,
- ledit adaptateur est configuré pour être monté sur le porte-balai selon une direction, dite de montage/démontage, située dans un plan perpendiculaire audit premier axe de rotation,
- ledit levier est mobile en rotation autour d'un deuxième axe de rotation, ledit deuxième axe appartenant à la pièce terminale et étant parallèle au premier axe de rotation,
- les moyens de maintien comprennent au moins un ergot escamotable selon une direction, dite d'escamotage, ladite direction d'escamotage comprenant une composante parallèle audit premier axe de rotation,
- le ou lesdits ergots sont aptes à venir se loger en position de travail à l'intérieur d'une ou de lumières réalisées dans le porte-balai,
- lesdites lumières sont débouchantes,
- lesdits ergots et lesdites lumières présentent des tailles respectives empêchant une manipulation desdits ergots,
- lesdits moyens de verrouillage comprennent au moins une partie en saillie venue de matière avec un corps du levier comprenant lesdits crochets,
- la ou lesdites parties en saillie définissent une troisième butée apte à empêcher l'escamotage du ou desdits ergots en position de travail,
- la ou lesdites parties en saillie sont situées au niveau des crochets,
- le ou lesdits ergots et/ou la ou lesdites lumières sont configurés pour permettre l'escamotage du ou desdits ergots en position de service,
- le ou lesdits ergots sont, chacun, situés sur une patte venue de matière avec un corps de l'adaptateur au niveau duquel le premier axe de rotation est situé,
- la ou desdites pattes de l'adaptateur sont configurées pour fléchir de manière à autoriser l'escamotage du ou desdits ergots.

L'invention concerne encore un système d'essuyage de pare-brise de véhicule comprenant un balai, un porte-balai et un dispositif tel que décrit ci-dessus permettant d'accrocher ledit balai audit porte-balai.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés, parmi lesquels :
- la figure 1 est une vue en perspective représentant partiellement un exemple de réalisation d'un système d'essuyage selon l'invention, en position de travail, la pièce terminale du porte-balai étant écorché pour rendre visible l'interface de connexion, la pièce intermédiaire dite levier, ainsi que le connecteur et l'adaptateur dudit système,
- la figure 2 reprend la figure 1 et permet de visualiser la manière dont le levier est manipulé pour entraîner l'interface de la position de travail vers la position de service,
- la figure 3 reprend les figures précédentes lors du démontage du balai dudit système,
- la figure 4 est une vue de détail du dispositif de connexion du système d'essuyage des figures précédentes, en position de travail, au niveau des parties de l'interface et du levier coopérant entre elles,
- la figure 5 reprend la figure 4 dans une configuration proche de la position de service,
- la figure 6 est une vue de dessous du dispositif de connexion du système d'essuyage des figures précédentes, en position de travail, seuls le porte-balai, l'adaptateur et le levier étant représentés,
- la figure 7 reprend la figure 6, le système étant en position de service,
- la figure 8 reprend les figures 6 et 7 lors du démontage du balai,
- la figure 9 est une vue en perspective représentant partiellement un autre exemple de réalisation du système d'essuyage selon l'invention, en position de travail, la pièce terminale du porte-balai et le manche du levier étant écorchés pour rendre visible l'interface de connexion, le détail dudit levier, ainsi que le connecteur et l'adaptateur dudit système,
- la figure 10 reprend la figure 9 et permet de visualiser la manière dont le levier est manipulé pour entraîner l'interface de la position de travail vers la position de service,
- la figure 11 reprend les figures 9 et 10, lors du démontage du balai dudit système,
- la figure 12 est une vue de détail du dispositif de connexion du système d'essuyage des figures 9 à 11, en position de travail, au niveau des parties de l'interface et du levier coopérant entre elles,
- la figure 13 reprend la figure 12 dans une configuration proche de la position de service,
- la figure 14 est une vue de détail desdites parties en position de service,
- la figure 15 est une vue en perspective du système d'essuyage des figures 9 à 14, en position de travail.

Comme illustré aux différentes figures, l'invention concerne un système d'essuyage de pare-brise de véhicule. Ce système comprend un bras ou porte-balai d'essuyage 10 qui présente une partie terminale ou tête de bras 12, dite pièce terminale par la suite. Le porte-balai d'essuyage 10 est destiné à déplacer un balai d'essuyage 14 dudit système d'essuyage à la surface d'un pare-brise de véhicule.

Le balai 14 est rattaché au porte-balai 10 par un connecteur mécanique 40 et un adaptateur 50 d'un dispositif de connexion dudit système d'essuyage. Le connecteur mécanique 40 est une pièce qui, par exemple, est sertie sur le balai 14. L'adaptateur 50 est une pièce intermédiaire qui permet la fixation du connecteur 40 sur la pièce terminale 12 du porte-balai 10. Ces deux pièces sont reliées l'une à l'autre par un axe transversal qui autorise leur rotation relative, dans un plan perpendiculaire au pare-brise et passant par le porte-balai 10.

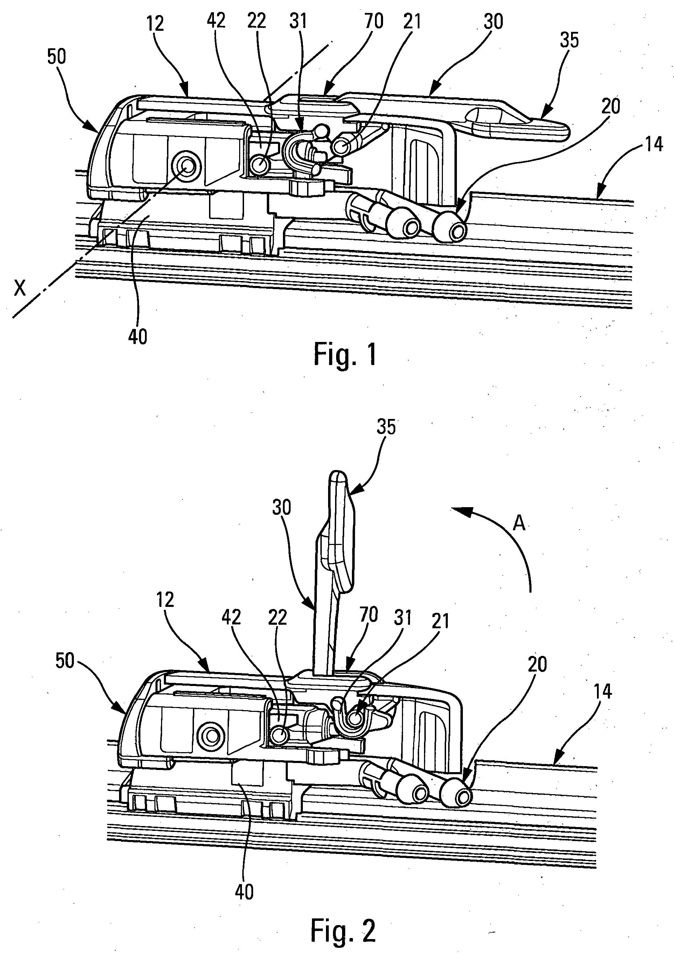

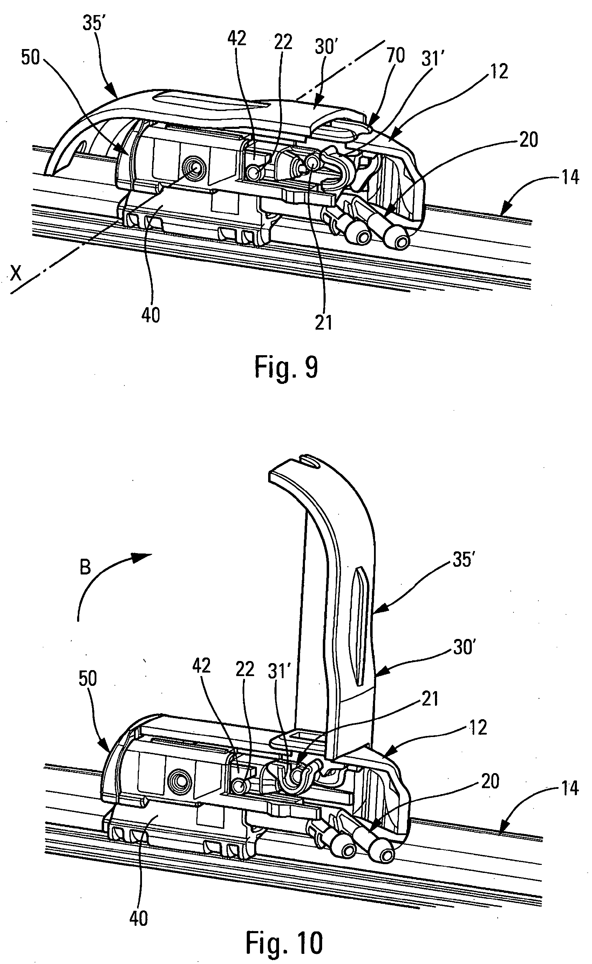

Cet axe transversal X est visible sur les figures 1 et 9. Il est aussi visible, sur cette figure 1, une interface de connexion 20 dudit dispositif de connexion. Cette interface de connexion 20 permet l'alimentation du balai 14 en liquide lave-vitre et/ou en électricité lorsqu'il est prévu de pouvoir chauffer la structure dudit balai 14, par exemple.

Ladite pièce terminale 12 forme avec une interface de connexion 20 et une pièce intermédiaire 30, 30' un ensemble, ledit ensemble étant apte à occuper une position de travail dans laquelle ladite interface 20 est libre par rapport à ladite pièce terminale 12 et une position de service dans laquelle ladite interface 20 est retenue de manière orientée par rapport à ladite pièce terminale 12 par ladite pièce intermédiaire 30, 30'.

Plus précisément, la position de travail est la position pour laquelle le balai 14 est assemblé au porte-balai 10. Dans la position de travail, l'interface 20 est libre par rapport à la pièce terminale 12 mais elle est maintenue par rapport au balai 14.

La position de service est la position pour laquelle le balai 14 est désassemblé du porte-balai 10. Dans la position de service, l'interface 20 est retenue de manière orientée à l'intérieur de la pièce terminale 12.

Selon l'invention, au moins une partie de ladite pièce intermédiaire 30, 30' est configurée de sorte à être accessible de façon à pouvoir être manipulée en rotation, en particulier autour d'un axe Y de la pièce terminale 12, pour passer de la position de travail à la position de service. On dispose ainsi d'un levier, avantageusement manipulable depuis l'extérieur.

Le levier 30, 30' est mobile en rotation autour de l'axe de rotation Y, appartenant à la pièce terminale 12, prévu parallèle à l'axe de rotation X de l'adaptateur sur le connecteur mécanique.

De plus, ledit adaptateur 50 est configuré pour être monté sur le porte-balai 10 selon une direction Z, dite de montage/démontage, située dans un plan perpendiculaire audit premier axe de rotation X.

Sur les figures 1, 2, 9 et 10 sont visibles des premiers tétons 21 situés sur l'interface 20 de connexion, ainsi que des logements 31, 31' situés sur la pièce intermédiaire 30, 30', dite levier. Ces premiers tétons 21 sont, de préférence, au nombre de deux, situés sur les faces latérales de l'interface 20, opposés l'un à l'autre par rapport à la direction longitudinale de ladite interface 20, ladite interface 20 étant orientée dans la direction longitudinale de la pièce terminale 12. Ces premiers tétons 21 sont, de préférence, cylindriques.

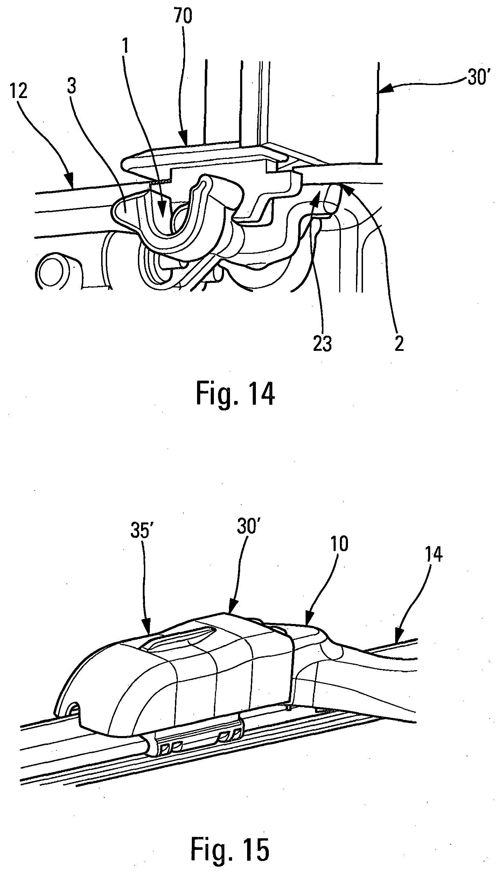

Lesdits logements 31, 31' sont aptes à retenir lesdits premiers tétons 21, en particulier en position de service. Ils sont situés sur le levier 30, 30' et sont de préférence au nombre deux, placés en regard desdits tétons 21. Ils sont mobiles en rotation, comme le levier 30, 30' et définissent une première butée 1 pour lesdits premiers tétons 21. Cette première butée 1 est particulièrement visible à la figure 14 dans le mode de réalisation en cause.

Lesdits logements 31, 31' sont des crochets, au moins en partie, cylindriques, venus de matière avec ledit levier 30, 30'.

Les logements 31, 31' agissent comme des premières butées 1 entre l'interface 20 et le levier 30, 30'. C'est pourquoi toute autre forme est envisageable pour lesdits premiers tétons 21 qui peuvent aussi être parallélépipédiques ou pyramidaux, par exemple.

Les premiers tétons 21 sont particulièrement avantageux car ils participent au passage de l'ensemble selon l'invention, de la position de travail à la position de service.

En position de travail, le maintien de l'interface 20 par rapport au balai 14 est réalisé par un connecteur 40 qui présente des formes caractéristiques permettant de retenir ladite interface de connexion 20. Il s'agit de contre-formes 42, en partie cylindriques, qui coopèrent avec des seconds tétons 22 appartenant à l'interface de connexion 20. Les contre-formes 42 ne sont pas fermées, elles présentent chacune une ouverture empruntée par chacun des seconds tétons 22 de l'interface de connexion pour venir s'y loger. Ces seconds tétons 22 de l'interface de connexion sont de préférence au nombre de deux, situés sur des faces latérales de l'interface 20, opposés l'un à l'autre par rapport à une direction d'extension longitudinale de ladite interface 20. Lesdits seconds tétons 22 sont plus proches du connecteur mécanique 40 que peuvent l'être lesdits premiers tétons 21.

Il est à noter qu'en position de travail, le levier n'entre avantageusement pas en contact avec l'interface 20 comme cela est visible sur les figures 1 et 9.

D'autre part, il est visible sur la figure 14, une deuxième butée 2 définie par la pièce terminale 12. Cette deuxième butée est apte à empêcher ladite interface 20 de pivoter à l'intérieur de ladite pièce terminale 12, en particulier en cas de premiers tétons 21 cylindriques. Cela est rendu possible par la géométrie extérieure 23 de ladite interface 20 qui est apte à coopérer avec ladite deuxième butée 2. Cette deuxième butée 2 empêche le pivotement de ladite interface 20 dans la pièce terminale 12 lors du désaccouplement du balai 14 par rapport à la pièce terminale 12. En effet, ladite deuxième butée 2 est configurée pour venir appuyer sur l'interface 20, en particulier sur une partie 23 sensiblement plane de ladite interface 20. Ladite partie 23 sensiblement plane est de préférence située du coté de ladite interface 20 opposé à son extrémité distale par rapport auxdits premiers tétons.

Un double verrouillage de ladite interface 20 à l'intérieur de la pièce terminale 12 est donc réalisé à l'aide des première et deuxième butées 1, 2 décrites ci-dessus, et, dans les modes de réalisation illustrés, ce sont lesdites première et deuxième butées 1, 2 qui avec les formes prévues en contrepartie sur l'interface de connexion 20, à savoir le ou les premiers tétons 21 et la partie 23 sensiblement plane, permettent d'orienter l'interface de connexion 20 pour faciliter le montage d'un nouveau balai.

Le passage de la position de travail vers la position de service est particulièrement visible sur les figures 2 et 10.

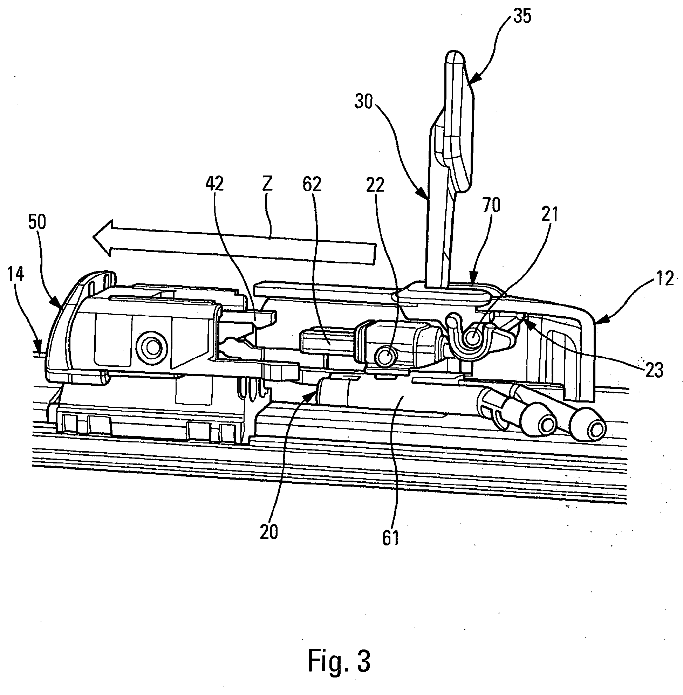

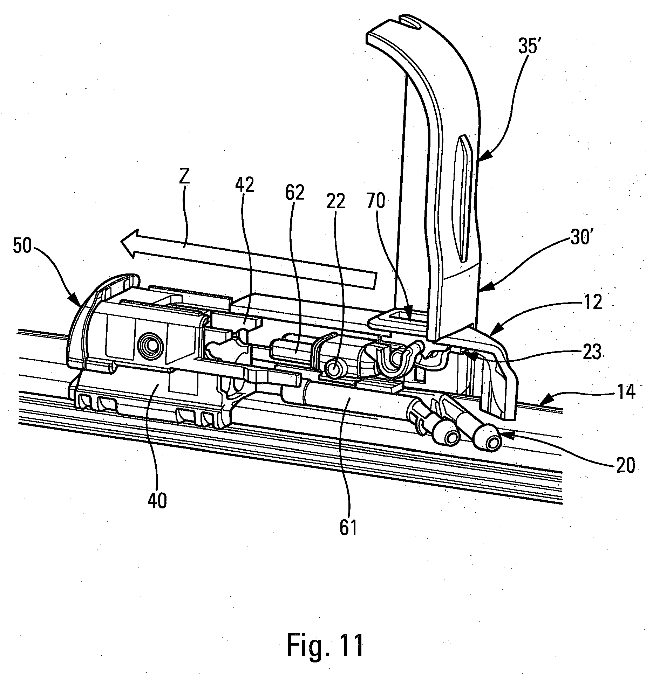

L'ensemble selon l'invention en position de service est illustré aux figures 3 et 11.

On y constate que l'interface 20 est retenue par les crochets 31,31' du levier 30, 30' à l'intérieur de la pièce terminale 12. Ces figures illustrent aussi le deuxième verrouillage de l'interface 20 à l'intérieur de la pièce terminale 12 par l'intermédiaire de la partie 23 sensiblement plane de ladite interface.

On y voit que les deuxièmes tétons 22 ne sont plus en prise dans les contre-formes 42 du connecteur 40.

On peut aussi y constater que l'interface 20 n'est plus couplée au balai 14, l'adaptateur 50 ayant été désassemblé de la pièce terminale 12.

Outre le connecteur 40 et l'adaptateur de raccordement 50 du connecteur 40 audit porte-balai 10, le dispositif de connexion selon l'invention comprend un ensemble tel que décrit plus haut.

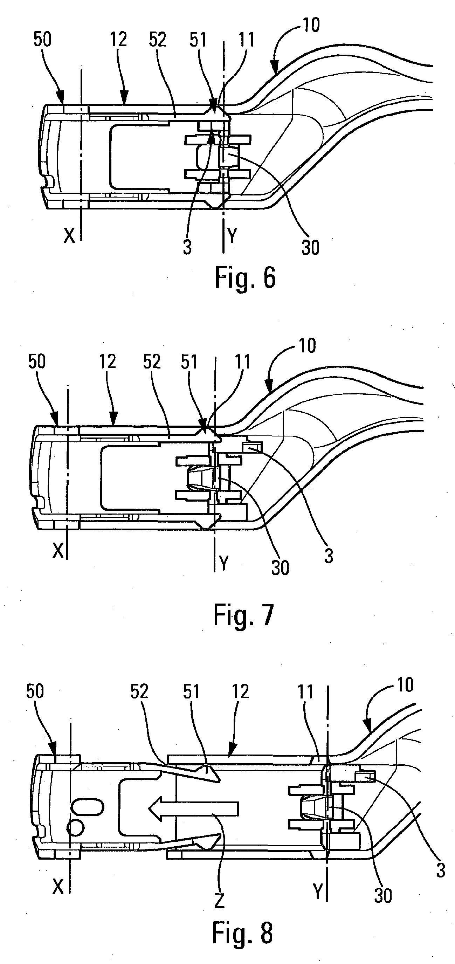

Les figures 6, 7 et 8 illustrent ledit adaptateur 50. Cet adaptateur 50 comprend des moyens de maintien 51 sur le porte-balai 10 en position de travail. Avantageusement, ledit levier 30, 30' comprend des moyens de verrouillage 3 desdits moyens de maintien 51, de manière à retenir l'adaptateur 50 sur le porte-balai 10.

La position de travail est ici assurée par des ergots 51 appartenant à l'adaptateur 50 qui viennent en prise dans des lumières 11 du porte-balai 10. Ces ergots 51 peuvent avoir une forme parallélépipédique, cylindrique, pyramidale ou tout autres formes du moment qu'ils soient aptes à se loger à l'intérieur des lumières 11 du bras 10. Lesdits ergots 51 sont de préférence au nombre de deux, appartenant chacun à une patte flexible 52 de l'adaptateur 50. En effet, l'adaptateur 50 comporte deux pattes flexibles 52 qui s'étendent, selon une direction perpendiculaire à l'axe transversal X, vers le porte-balai 10. Ces deux pattes flexibles 52 pourront être situées de chaque côté de l'adaptateur 50, de façon symétriques par rapport à un plan perpendiculaire à l'axe transversal X.

Les lumières 11 sont ici des évidements, de préférence débouchant, situés dans la pièce terminale 12. Les lumières 11 présentent une forme permettant de loger lesdits ergots 51. Ces évidements peuvent être obtenus directement lors du formage du porte-balai 10, voire par traitement ultérieur, par exemple par des usinages réalisés localement sur la pièce terminale 12. Ces lumières 11 sont de préférence au nombre de deux, situées de chaque côté de la pièce terminale 12, de façon symétrique par rapport à un plan perpendiculaire à l'axe transversal X.

La taille respective des ergots 51 et des évidements 11 empêche ici leur manipulation par un utilisateur. Autrement dit, les ergots 51, par leur dimensionnement ainsi que par le dimensionnement des évidements 11, sont configurés pour qu'un utilisateur ne puisse pas les désengager manuellement, notamment en raison de leur petite section et/ou de l'épaisseur importante des parois de la pièce terminale 12.

Cependant, l'utilisateur pourra désengager lesdits ergots 51 des lumières 11 de la manière qui va être décrite ci-dessous.

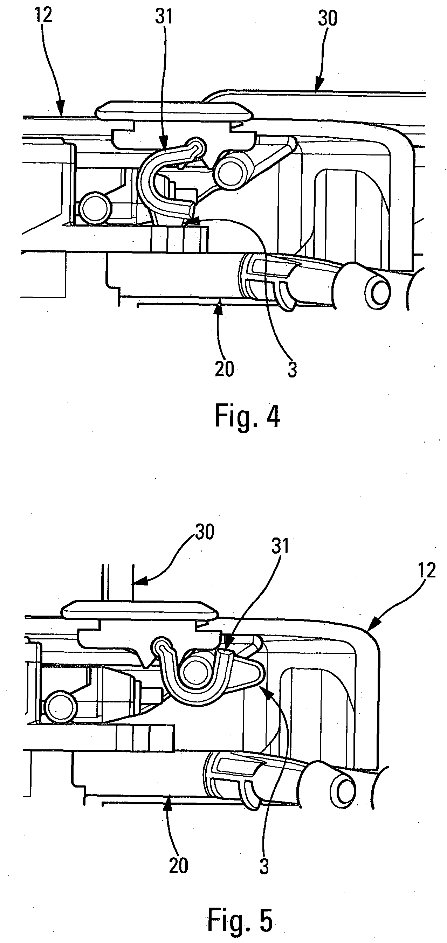

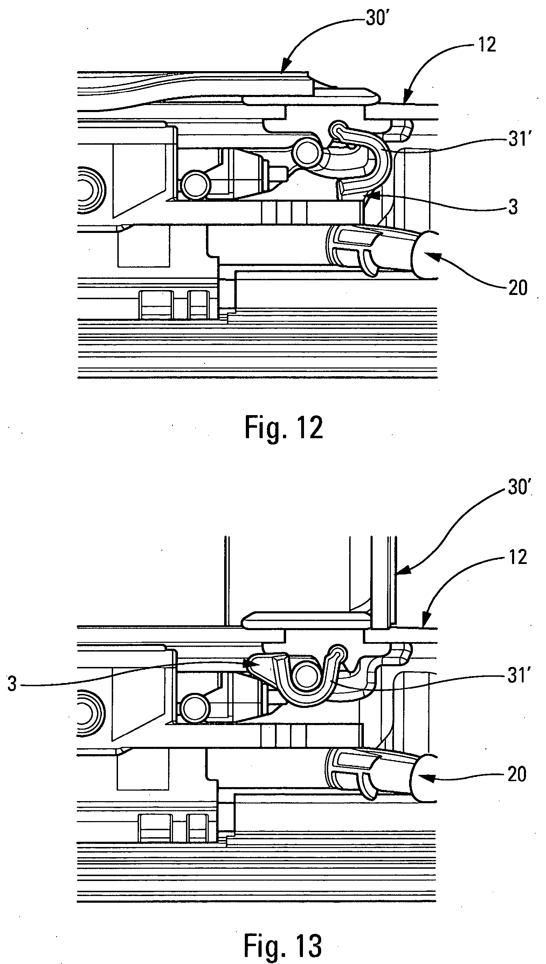

Les figures 4 et 12 donnent des vues de détail des moyens de verrouillage 3 du dispositif selon l'invention, l'ensemble de l'invention étant en position de travail. Lesdits moyens de verrouillage 3 comprennent au moins une partie en saillie 3 venue de matière avec le levier 30, 30'. Lesdites parties en saillie 3 définissent une troisième butée apte à empêcher l'escamotage desdits ergots 51 en position de travail. Elles sont de préférence au nombre de deux, chacune située au niveau des crochets 31, 31' et mobiles en rotation comme ceux-ci.

Par ailleurs, lesdits ergots 51, sont escamotables selon une direction, dite d'escamotage, ladite direction d'escamotage comprenant une composante parallèle audit premier axe de rotation X. En effet, lesdits ergots 51 sont, comme évoqué ci-dessus, situés sur une patte 52 venue de matière avec l'adaptateur 50. Leur escamotage est obtenu par le fléchissement desdites pattes 52 de l'adaptateur 50.

En position de travail, les parties en saillie 3 viennent en butée contre lesdites pattes 52 et empêchent leur fléchissement dans la direction d'escamotage.

La figure 7 est aussi une vue de dessous du dispositif selon l'invention, les moyens de maintien 51 n'étant pas verrouillés, seuls le porte-balai 10, l'adaptateur 50 et le levier 30, 30' étant représentés.

Le levier 30, 30' a été pivoté par rapport au deuxième axe de rotation Y de manière à dégager les troisièmes butées 3.

Les figures 5 et 13 donnent des vues de détail des moyens de verrouillage 3 du dispositif selon l'invention, l'ensemble de l'invention étant proche de la position de service. Sur ces figures il est particulièrement visible que les parties en saillies 3 n'empêchent plus le fléchissement des pattes 52 de l'adaptateur 50 ; les parties en saillie 3 ne venant plus en butée avec lesdites pattes 52.

La figure 8 est encore une vue de dessous du dispositif selon l'invention, les moyens de maintien 3 étant escamotés dans la pièce terminale 12, seuls le porte-balai 10, l'adaptateur 50 et le levier 30 étant représentés.

Il est visible, sur cette figure, la direction Z, dite de montage/démontage selon laquelle ledit adaptateur 50 est configuré pour être monté sur le porte-balai 10. Sur la figure 8, le sens donné à cette direction Z est celui du démontage de l'adaptateur 50 par rapport à ladite pièce terminale 12. Ladite direction Z est aussi référencée sur les figures 3 et 11.

Lesdits ergots 51 et lesdites lumières 11 sont configurés pour permettre l'escamotage desdits ergots en position de service. En effet, ils présentent des formes qui facilitent leur dégagement l'un de l'autre. Lesdites formes sont, par exemple, des pentes, tel que des chanfreins.

Ainsi, entre la position de travail et la position de service, comme illustré à la figure 8, ces formes agissent de manière à faciliter la sortie des ergots 51 des lumières 11 du porte-balai 12, en entrainant le fléchissement des pattes 52 de l'adaptateur 50, selon la direction d'escamotage.

Comme déjà dit, les ergots 51 ne sont pas accessibles manuellement du fait de leur petite taille. Seul un déplacement, par exemple en rotation, dudit levier 30, 30' par rapport à la pièce terminale 12 est apte à autoriser le désengagement des moyens de verrouillage et autorise ainsi le désaccouplement de l'adaptateur 50 et du bras 12 ; les ergots 51 étant alors libres de sortir des lumières 11 du bras 10.

Ladite interface de connexion permet de préférence la connexion hydraulique et/ou électrique d'un balai d'essuyage 14 possédant une fonction de lavage embarqué et/ou un système de chauffage de sa structure. En particulier, cette invention concerne la connexion et la déconnexion hydraulique et/ou électrique du balai 14, d'avec le porte-balai 10 en un seul mouvement lors du désassemblage du balai 14 de son porte-balai 10.

Une première partie de la présente description a permis d'introduire le levier 30, 30' qui vient retenir, entre autres, les premiers ergots 21 de l'interface de connexion lors du passage de la position de travail à la position de service ; la position de service correspondant à celle dans laquelle on peut désassembler le balai 14 et le porte-balai 10, l'interface de connexion 20 étant alors maintenue orientée par rapport au porte-balai par une deuxième butée 2 qui coopère avec la partie 23 sensiblement plane de ladite interface 20 décrit ci-dessus.

Une deuxième partie de la présente description a permis de mettre en évidence que l'interface de connexion 20 est retenu sur le balai 14 via le connecteur 40 en position de travail, à savoir lorsque le balai 14 et le porte-balai 10 sont assemblés, tout en autorisant la rotation du balai 14 par rapport au porte-balai 10 autour de l'axe X.

Une troisième partie de la présente description a permis d'expliquer le rôle de l'adaptateur 50 dont les pattes flexibles 52 comportent des ergots 51 qui permettent son maintien à l'intérieur du porte-balai 10, plus précisément à l'intérieur d'une pièce terminale 12 du porte-balai 10. Dans cette troisième partie, une fonction complémentaire du levier 30, 30' a été détaillée, la fonction de verrouillage desdits ergots 51 en position de travail.

Pour compléter la présente description, il est à noter que l'action de désassemblage peut s'effectuer une fois que l'on a fait pivoter le levier 30, 30' par rapport à la pièce terminale 14 du porte-balai 10. Cela est permis car au moins une partie du levier 30, 30' est accessible de façon à pouvoir être manipulé pour passer de la position de travail à la position de service. Cette partie forme, par exemple, un manche 35, 35' du levier 30, 30'.

Ledit manche 35, 35' couvre au moins une partie dudit porte-balai et est situé sur une face du porte-balai 10 destinée à être à l'opposé du balai 14. Ce manche 35, 35' adopte, en position de travail, une position parallèle par rapport à la direction longitudinale du porte-balai 10 et, en position de service, une position orthogonale par rapport à la direction longitudinale du porte-balai 10.

Selon un premier mode de réalisation de l'invention illustré aux figures 1 à 5, le manche 35 couvre une partie seulement de la pièce terminale 12 du porte-balai 10. De plus, en position de travail, la partie distale du manche 35 est tourné du côté du porte-balai 10.

Pour passer en position de service, il suffit de faire subir au levier 30 une rotation d'un quart de cercle dans le sens antihoraire, repéré par la flèche A sur la figure 2. Cela entraine une rotation des crochets 31 d'un même quart de cercle. Lesdits crochets 31 viennent alors retenir les premiers tétons 21 et déverrouiller les pattes flexibles 52 afin de permettre aux ergots 51 de se désengager des lumières 11 réalisées dans la pièce terminale 12 du porte-balai 10. L'utilisateur peut alors désassembler le balai 14 du porte-balai 10 en tirant longitudinalement sur le balai 14 dans la direction Z, tout en étant assuré que l'interface de connexion 20 d'un tel ensemble d'essuyage soit maintenue dans la pièce terminale 12.

Selon un deuxième mode de réalisation de l'invention illustré aux figures 9 à 15, le manche 35' est destiné à couvrir la pièce terminale 12 du porte-balai 10, le connecteur 40 et l'adaptateur 50. Le manche 35' est alors un capot de couverture qui peut être clipé au balai 14. De plus, en position de travail, la partie distale du manche 35' est tournée du côté opposé au porte-balai 10.

Pour passer en position de service, il suffit de faire subir au levier 30' une rotation d'un quart de cercle dans le sens horaire, repéré par la flèche B sur la figure 10. Cela entraine une rotation des crochets 31' d'un même quart de cercle. Lesdits crochets 31' viennent alors retenir les premiers tétons 21 et déverrouiller les pattes flexibles 52 afin de permettre aux ergots 51 de se désengager des lumières 11 réalisées dans la pièce terminale 12 du porte-balai 10. L'utilisateur peut alors désassembler le balai 14 du porte-balai 10 en tirant longitudinalement sur le balai 14 dans la direction Z, tout étant assuré que l'interface de connexion d'un tel ensemble d'essuyage soit maintenue dans la pièce terminale 12.

Concernant ces deux modes de réalisation, le passage de la position de service à la position de travail s'effectue par les opérations inverses.

Il est à noter que dans les exemples décrit ci-dessus, l'interface de connexion 20 comprend un connecteur hydraulique 61 et un connecteur électrique 62, comme cela est particulièrement visible sur les figures 3 et 11 ; ladite interface 20 comprenant des moyens assurant le verrouillage du connecteur hydraulique 61 sur le connecteur électrique 62 (moyens de verrouillage non détaillés sur les figures).

Ici, les premiers et seconds tétons 21, 22 sont prévus sur le connecteur électrique 62 plutôt que sur le connecteur hydraulique 31. Il est cependant possible de les prévoir sur le connecteur hydraulique.

Il est aussi à noter que d'autres variantes de réalisation sont bien sûr possibles. Notamment il est aussi envisageable, dans un mode de réalisation supplémentaire, que les premiers et seconds ergots dudit ensemble soient situés sur le levier 30, 30' alors que les butées seraient, quant à elles, situées sur l'interface 20.

Il est encore à noter que la pièce terminale 12 comprend une fenêtre pour le passage dudit levier 30, 30'. L'ensemble évoqué plus haut comprend ici une pièce supplémentaire 70, solidaire de la pièce terminale 12, configurée pour permettre une articulation entre ledit levier 30, 30' et ladite pièce terminale 12.

## Revendications

1. Ensemble pour la réalisation d'un système d'essuyage de pare-brise de véhicule, comprenant une pièce terminale (12) d'un porte-balai (10) destiné à déplacer un balai d'essuyage (14), une interface de connexion (20) et une pièce intermédiaire (30, 30'), ledit ensemble étant apte à occuper une position de travail dans laquelle ladite interface (20) est libre par rapport à ladite pièce terminale (12) et une position de service dans laquelle ladite interface (20) est retenue de manière orientée par rapport à ladite pièce terminale (12) par ladite pièce intermédiaire (30, 30'), **caractérisé en ce que** au moins une partie de ladite pièce intermédiaire, dite levier (30, 30'), est configurée de sorte à être accessible de façon à pouvoir être manipulée en rotation pour passer de la position de travail à la position de service.

2. Ensemble selon la revendication précédente, comportant au moins un premier téton situé sur l'un des éléments parmi ledit levier (30, 30') et ladite interface (20), et au moins un logement, situé sur l'autre élément, le ou lesdits logements étant apte à retenir le ou lesdits premiers tétons en position de service.

3. Ensemble selon la revendication précédente, dans lequel le ou lesdits logements (31, 31') sont situés sur ledit levier (30, 30').

4. Ensemble selon l'une quelconque des revendications 2 ou 3, dans lequel le ou lesdits logements (31, 31') sont mobiles en rotation.

5. Ensemble selon l'une quelconque des revendications 2 à 4, dans lequel le ou lesdits logements (31, 31') définissent une première butée (1).

6. Ensemble selon la revendication précédente, dans lequel ladite pièce terminale (12) et/ou ledit porte-balai (10) définissent une deuxième butée (2) apte à empêcher ladite interface (20) de pivoter à l'intérieur de ladite pièce terminale (12) en position de service.

7. Ensemble selon l'une quelconque des revendications précédentes, dans lequel ladite interface (20) comprend au moins un connecteur hydraulique (61) et/ou un connecteur électrique (62).

8. Ensemble selon l'une quelconque des revendications 2 à 7, dans lequel ledit levier (30, 30') comprend un manche (35, 35') permettant de le faire passer de ladite position de travail à ladite position de service.

9. Ensemble selon la revendication précédente, dans lequel ledit manche (35, 35') est situé sur une face dudit porte-balai (10), destinée à être à l'opposé du balai.

10. Ensemble selon l'une quelconque des revendications 2 à 9, dans lequel la pièce terminale (12) comprend une fenêtre pour le passage dudit levier-(30, 30').

11. Ensemble selon l'une quelconque des revendications 2 à 10, comprenant une pièce supplémentaire (70) solidaire de la pièce terminale est configurée pour permettre une articulation entre ledit levier (30, 30') et ladite pièce terminale (12).

12. Dispositif de connexion d'un système d'essuyage de pare-brise de véhicule comprenant un ensemble selon l'une quelconque des revendications précédentes, un connecteur (40) destiné à être fixé audit balai (14) et un adaptateur (50) de raccordement du connecteur (40) audit porte-balai (10).

13. Dispositif selon la revendication précédente, dans lequel ledit adaptateur (50) comprend des moyens de maintien sur le porte-balai (10) en position de travail, ledit levier (30, 30') comprenant des moyens de verrouillage desdits moyens de maintien (51), de manière à retenir l'adaptateur (50) sur le porte-balai (10) en position de travail.

14. Dispositif selon la revendication précédente, dans lequel l'adaptateur (50) est lié au connecteur (40) pour être monté sur le porte-balai (10) avec un degré de pivotement autour d'un premier axe de rotation (X), ledit adaptateur (50) étant configuré pour être monté sur le porte-balai (10) selon une direction (Z), dite de montage/démontage, située dans un plan perpendiculaire audit premier axe de rotation (X).

15. Dispositif selon la revendication précédente, dans lequel ledit levier (30, 30') est mobile en rotation autour d'un deuxième axe de rotation (Y), ledit deuxième axe (Y) appartenant à la pièce terminale (12) et étant parallèle au premier axe de rotation (X).

16. Dispositif selon l'une quelconque des revendications 14 ou 15, dans lequel les moyens de maintien comprennent au moins un ergot (51) escamotable selon une direction, dite d'escamotage, ladite direction d'escamotage comprenant une composante parallèle audit premier axe de rotation (X).

17. Dispositif selon la revendication précédente, dans lequel le ou lesdits ergots (51) sont aptes à venir se loger en position de travail à l'intérieur d'une ou de lumières (11) réalisées dans le porte-balai (10).

18. Dispositif selon l'une quelconque des revendications 16 ou 17, dans lequel lesdits moyens de verrouillage comprennent au moins une partie en saillie (3) venue de matière avec un corps du levier (30, 30'), la ou lesdites parties en saillie (3) définissant une troisième butée apte à empêcher l'escamotage du ou desdits ergots (51) en position de travail.

19. Dispositif selon la revendication 17, dans lequel le ou lesdits ergots (51) et/ou la ou lesdites lumières (11) sont configurés pour permettre l'escamotage du ou desdits ergots (51) en position de service.

20. Système d'essuyage de pare-brise de véhicule comprenant un balai (14), un porte-balai (10) et un dispositif selon l'une quelconque des revendications 12 à 19 permettant d'accrocher ledit balai (14) audit porte-balai (10).

## Patentansprüche

1. Baugruppe für die Realisierung eines Wischsystems für die Windschutzscheibe eines Fahrzeugs, umfassend ein Endstück (12) eines Wischerblatthalters (10), die dazu bestimmt ist, ein Wischerblatt (14), eine Verbindungsschnittstelle (20) und ein Zwischenstück (30, 30') zu bewegen, wobei die Baugruppe in der Lage ist, eine Arbeitsposition, in der die Schnittstelle (20) bezogen auf das Endstück (12) frei ist, und eine Betriebsposition, in der die Schnittstelle (20) bezogen auf das Endstück (12) durch das Zwischenstück (30, 30') gerichtet zurückgehalten wird, einzunehmen, **dadurch gekennzeichnet, dass** mindestens ein Teil des Zwischenstücks, genannt Hebel (30, 30'), so konfiguriert ist, dass es dergestalt zugänglich ist, um in Drehung betätigt zu werden, um von der Arbeitsposition in die Betriebsposition überzugehen.

2. Baugruppe nach dem vorangehenden Anspruch, aufweisend mindestens einen ersten Ansatz, der sich an einem der Elemente aus dem Hebel (30, 30') und der Schnittstelle (20) befindet, und mindestens eine Aufnahme, die sich am anderen Element befindet, wobei die Aufnahme oder Aufnahmen in der Lage sind, den oder die ersten Ansätze in der Betriebsposition zurückzuhalten.

3. Baugruppe nach dem vorangehenden Anspruch, bei der sich die Aufnahme oder Aufnahmen (31, 31') am Hebel (30, 30') befinden.

4. Baugruppe nach einem der Ansprüche 2 oder 3, bei der die Aufnahme oder Aufnahmen (31, 31') drehbar sind.

5. Baugruppe nach einem der Ansprüche 2 bis 4, bei der die Aufnahme oder Aufnahmen (31, 31') einen ersten Anschlag (1) definieren.

6. Baugruppe nach dem vorangehenden Anspruch, bei der das Endstück (12) und/oder der Wischerblatthalter (10) einen zweiten Anschlag (2) definieren, der in der Lage ist, die Schnittstelle (20) daran zu hindern, im Inneren des Endstücks (12) in Betriebsposition zu schwenken.

7. Baugruppe nach einem der vorangehenden Ansprüche, bei der die Schnittstelle (20) mindestens einen hydraulischen Verbinder (61) und/oder einen elektrischen Verbinder (62) umfasst.

8. Baugruppe nach einem der Ansprüche 2 bis 7, bei der der Hebel (30, 30') einen Griff (35, 35') umfasst, der es gestattet, ihn von der Arbeitsposition in die Betriebsposition übergehen zu lassen.

9. Baugruppe nach dem vorangehenden Anspruch, bei der sich der Griff (35, 35') an einer Seite des Wischerblatthalters (10), die dazu bestimmt ist, dem Wischerblatt gegenüberzuliegen, befindet.

10. Baugruppe nach einem der Ansprüche 2 bis 9, bei der das Endstück (12) ein Fenster für die Durchführung des Hebels (30, 30') umfasst.

11. Baugruppe nach einem der Ansprüche 2 bis 10, umfassend ein zusätzliches Stück (70), das fest mit dem Endstück verbunden ist und konfiguriert ist, um ein Gelenk zwischen dem Hebel (30, 30') und dem Endstück (12) zu ermöglichen.

12. Vorrichtung zur Verbindung eines Wischsystems für die Windschutzscheibe eines Fahrzeugs, umfassend eine Baugruppe nach einem der vorangehenden Ansprüche, einen Verbinder (40), der dazu bestimmt ist, am Wischerblatt (14) befestigt zu werden, und einen Adapter (50) zum Anschluss des Verbinders (40) am Wischerblatthalter (10).

13. Vorrichtung nach dem vorangehenden Anspruch, bei der der Adapter (50) Mittel zum Halten am Wischerblatthalter (10) in Arbeitsposition umfasst, wobei der Hebel (30, 30') Mittel zum Verriegeln der Mittel zum Halten (51), dergestalt dass der Adapter (50) am Wischerblatthalter (10) in Arbeitsposition zurückgehalten wird, umfasst.

14. Vorrichtung nach dem vorangehenden Anspruch, bei der der Adapter (50) mit dem Verbinder (40) verbunden ist, um am Wischerblatthalter (10) mit einem Schwenkgrad um eine erste Drehachse (X) montiert zu werden, wobei der Adapter (50) konfiguriert ist, um am Wischerblatthalter (10) nach einer Richtung (Z), genannt Montage-/Demontagerichtung, die in einer Ebene senkrecht zur ersten Drehachse (X) liegt, montiert zu werden.

15. Vorrichtung nach dem vorangehenden Anspruch, bei der der Hebel (30, 30') um eine zweite Drehachse (Y) drehbar ist, wobei die zweite Achse (Y) zum Endstück (12) gehört und parallel zur ersten Drehachse (X) ist.

16. Vorrichtung nach einem der Ansprüche 14 oder 15, bei der die Mittel zum Halten mindestens eine Nase (51), die nach einer Versenkrichtung gennannten Richtung versenkbar ist, umfassen, wobei die Versenkrichtung eine zur ersten Drehachse (X) parallele Komponente umfasst.

17. Vorrichtung nach dem vorangehenden Anspruch, bei der die Nase oder Nasen (51) in der Lage sind, in Arbeitsposition im Inneren einer oder mehrerer Öffnungen (11), die im Wischerblatthalter (10) ausgebildet sind, aufgenommen zu werden.

18. Vorrichtung nach einem der Ansprüche 16 oder 17, bei der die Mittel zum Verriegeln mindestens einen hervorstehenden Teil (3), der einstückig mit einem Korpus des Hebels (30, 30') ausgeführt ist, umfassen, wobei der oder die hervorstehenden Teile (3) einen dritten Anschlag definieren, der in der Lage ist, das Versenken der Nase oder Nasen (51) in Arbeitsposition zu verhindern.

19. Vorrichtung nach Anspruch 17, bei der die Nase oder Nasen (51) und/oder die Öffnung oder Öffnungen (11) konfiguriert sind, um das Versenken der Nase oder Nasen (51) in Betriebsposition zu gestatten.

20. Wischsystem für die Windschutzscheibe eines Fahrzeugs, umfassend ein Wischerblatt (14), einen Wischerblatthalter (10) und eine Vorrichtung nach einem der Ansprüche 12 bis 19, welche es gestattet, das Wischerblatt (14) am Wischerblatthalter (10) einzuhaken.

## Claims

1. Assembly for producing a vehicle windscreen wiper system, comprising an end piece (12) of a wiper holder (10) that is intended to move a wiper (14), a connection interface (20) and an intermediate piece (30, 30'), said assembly being able to take up a working position in which said interface (20) is free with respect to said end piece (12) and a service position in which said interface (20) is retained in an oriented manner with respect to said end piece (12) by said intermediate piece (30, 30'), **characterized in that** at least a part of said intermediate piece, known as a lever (30, 30'), is configured to be accessible so as to be able to be rotated in order to pass from the working position to the service position.

2. Assembly according to the preceding claim, having at least a first stud located on one of the elements comprising said lever (30, 30') and said interface (20), and at least one housing located on the other element, the housing(s) being able to retain said first stud(s) in the service position.

3. Assembly according to the preceding claim, wherein said housing (s) (31, 31') is/are located on said lever (30, 30').

4. Assembly according to either of Claims 2 and 3, wherein said housing(s) (31, 31') is/are able to rotate.

5. Assembly according to any one of Claims 2 to 4, wherein the housing(s) (31, 31') define(s) a first abutment (1).

6. Assembly according to the preceding claim, wherein said end piece (12) and/or said wiper holder (10) define (s) a second abutment (2) that is able to prevent said interface (20) from pivoting inside said end piece (12) in the service position.

7. Assembly according to any one of the preceding claims, wherein said interface (20) comprises at least one hydraulic connector (61) and/or an electrical connector (62).

8. Assembly according to any one of Claims 2 to 7, wherein said lever (30, 30') comprises a handle (35, 35') for moving it from said working position to said service position.

9. Assembly according to the preceding claim, wherein said handle (35, 35') is located on a face of said wiper holder (10) that is intended to face away from the wiper.

10. Assembly according to any one of Claims 2 to 9, wherein the end piece (12) comprises a window for said lever (30, 30') to pass through.

11. Assembly according to any one of Claims 2 to 10, comprising an additional piece (70) secured to the end piece and configured to allow an articulation between said lever (30, 30') and said end piece (12).

12. Connection device for a vehicle windscreen wiper system, comprising an assembly according to any one of the preceding claims, a connector (40) intended to be fixed to said wiper (14) and an adapter (50) for attaching the connector (40) to said wiper holder (10).

13. Device according to the preceding claim, wherein said adapter (50) comprises holding means for holding on to the wiper holder (10) in the working position, said lever (30, 30') comprising means for locking said holding means (51), so as to retain the adapter (50) on the wiper holder (10) in the working position.

14. Device according to the preceding claim, wherein the adapter (50) is connected to the connector (40) so as to be mounted on the wiper holder (10) with a degree of pivoting about a first rotation axis (X), said adapter (50) being configured to be mounted on the wiper holder (10) in a direction (Z) known as the mounting/removal direction that is located in a plane perpendicular to said first rotation axis (X).

15. Device according to the preceding claim, wherein said lever (30, 30') is able to rotate about a second rotation axis (Y), said second axis (Y) belonging to the end piece (12) and being parallel to the first rotation axis (X).

16. Device according to either of Claims 14 and 15, wherein the holding means comprise at least one lug (51) that is retractable in a direction known as the retraction direction, said retraction direction comprising a component parallel to said first rotation axis (X).

17. Device according to the preceding claim, wherein said lugs (s) (51) is/are able to be housed in the working position inside one or more slots (11) provided in the wiper holder (10).

18. Device according to either of Claims 16 and 17, wherein said locking means comprise at least one projecting part (3) produced in one piece with a body of the lever (30, 30'), said projecting part(s) (3) defining a third abutment that is able to prevent the retraction of said lugs(s) (51) in the working position.

19. Device according to Claim 17, wherein said lugs(s) (51) and/or said slot(s) (11) is/are configured to allow the retraction of the lug(s) (51) in the service position.

20. Vehicle windscreen wiper system comprising a wiper (14), a wiper holder (10) and a device according to any one of Claims 12 to 19 for attaching said wiper (14) to said wiper holder (10).
